# EUROPÄISCHE PATENTANMELDUNG

(11) **EP 1 477 542 A1**
(43) Veröffentlichungstag der Anmeldung: **17.11.2004**
(21) Anmeldenummer: 04014375.2
(22) Anmeldetag: 10.01.2001
(51) Int. Cl.: C09K 3/10, C09J 133/08

(54) **Einkomponentige Dichtmasse auf Basis einer Dispersion von Vinylpolymeren**

(30) Priorität: 12.01.2000 DE 10000940
(62) Teilanmeldung aus: 02023786.3
(71) Anmelder: Silu Verwaltung AG, 6045 Meggen (CH)
(72) Erfinder: Sieber, Marco, 6048 Horw (CH); Sieber, Reto, 6019 Sigigen (CH); Vandeweerdt, Patrick, 6331 Hünenberg (CH)
(74) Vertreter: Bublak, Wolfgang

(57) **Zusammenfassung**

Einkomponentige Dichtmasse auf Basis einer Dispersion von Vinylpolymeren, wobei die Dichtmasse im Nasszustand im wesentlichen frei von flüchtigen organischen Verbindungen (VOC) ist und im Trockenzustand selbstklebend ist. Die Dichtmasse eignet sich insbesondere zum Anschließen von Polyolefin-Materialien.

## Beschreibung

Die Erfindung betrifft eine einkomponentige Dichtmasse auf Basis einer Dispersion von Vinylpolymeren, wobei die Dichtmasse im Nasszustand im wesentlichen frei von flüchtigen organischen Verbindungen ist und im Trockenzustand selbstklebend ist. Weiterhin betrifft die Erfindung die Herstellung und Verwendung dieser Dichtmasse sowie mit dieser Dichtmasse beschichtete Materialien.

Das Verbinden von Materialien wird allgemein unterteilt in Kleben und Dichten. Das Abdichten von Materialien ist eine Anwendung, die in allen Branchen von der metallverarbeitenden Industrie bis zum Baubereich angetroffen wird. Dichtstoffe haben die Aufgabe, Bewegungen, die zwischen z.B. Bauteilen entstehen, aufzufangen und die Fugen zu schließen. Fugen müssen abgedichtet werden, damit keine Feststoffe, Flüssigkeiten oder Gase am falschen Ort eindringen können. Dagegen stehen bei Klebstoffen die Herstellung eines Verbundes und dadurch ihre Hafteigenschaften und Festigkeit im Vordergrund. Man kann klebende und dichtende Massen zum Verbinden von Substraten nach ihrer Festigkeit differenzieren: fest, elastisch oder plastisch. Bei abnehmender Zugscherfestigkeit geht die Dehnung der Masse durch ein Maximum, wobei die Masse von fest über elastisch in den plastischen Bereich übergeht. Die Festigkeit der Masse bestimmt, ob von einem Klebstoff (fest bis elastisch) oder einer Dichtmasse (elastisch bis plastisch) gesprochen wird. So muss ein Klebstoff eine gewisse Zugfestigkeit besitzen, damit strukturelle Verklebungen erfolgreich ausgeführt werden können. Dagegen werden bei Dichtmassen grundsätzlich Massen mit elastischen Eigenschaften verwendet, die ein bestimmtes Ausdehnungsvermögen haben, um Ausdehnungen und Schrumpfungen auffangen zu können, so dass keine Risse oder Brüche und damit Undichtigkeiten entstehen. Die bekannten Dichtmassen haben die Eigenschaft, dass sie nach ihrem Auftrag aushärten, so dass kein Schmutz an der Oberfläche haften bleibt.

Im Baubereich sind zur Abdichtung von Polyolefin-Materialien, z.B. Polyethylen-Folien, Dichtmassen bekannt, die lösungsmittelhaltig sind, und damit flüchtige organische Verbindungen enthalten. Aufgrund von Umweltaspekten und auch wegen ihres starken Geruchs stoßen derartige Dichtungsmassen auf immer größeren Widerstand und neuere Entwicklungen zielen auf im wesentlichen lösungsmittelfreie Dichtmassen ab.

Somit bestand die der Erfindung zugrundeliegende Aufgabe in der Bereitstellung einer Dichtmasse, die möglichst wenig flüchtige organische Verbindungen enthält und eine wirksame Abdichtung von Polyolefin-Materialien erreicht.

Zur Lösung dieser Aufgabe wird eine einkomponentige, im wesentlichen von flüchtigen organischen Verbindungen freie Dichtmasse auf Basis einer Dispersion von Vinylpolymeren vorgeschlagen, die im Trockenzustand selbstklebend ist.

Somit betrifft die Erfindung eine einkomponentige Dichtmasse auf Basis einer Dispersion von Vinylpolymeren, wobei die Dichtmasse im Nasszustand im wesentlichen frei von flüchtigen organischen Verbindungen ist und im Trockenzustand selbstklebend ist. Außerdem betrifft die Erfindung die Herstellung der erfindungsgemäßen Dichtmasse und ihre Verwendung zum Anschließen und/oder Abdichten von Materialien, insbesondere von Polyolefin-Materialien, sowie mit der erfindungsgemäßen Dichtmasse beschichtete Materialien. Bevorzugte Ausführungsformen der Erfindung sind in den Unteransprüchen und der nachfolgenden Beschreibung definiert.

Die erfindungsgemäße Dichtmasse ist im Trockenzustand selbstklebend. Die Klebrigkeit der Oberfläche der Dichtmasse kann gemäß Test Methods for Pressure-Sensitive Adhesives, 6^{th} edition, Pressure sensitive tape council, Itasca III mit einer laufenden Kugel gemessen werden, deren Weg weniger als etwa 30 cm, bevorzugt weniger als etwa 20 cm, beträgt. Die erfindungsgemäße Dichtmasse ist grundsätzlich nach dem Trocknen immer selbstklebend, d.h. es kann jederzeit, auch nach der Trocknung, eine Verklebung erreicht werden und die selbstklebende Eigenschaft bleibt bestehen.

Als Vinylpolymere eignen sich alle Polymere auf Basis wenigstens eines der Monomere, die in Handbook of Pressure Sensitive Adhesive Technology, 2^{nd} edition, Donatas Satas, 1989, Van Nostrand Reinhold, 0-442-28026-2, Seite 444 bis 450 beschrieben sind. Besonders geeignet sind Vinylpolymere auf Basis von wenigstens Acrylat- und/oder Methacrylat-Monomeren, insbesondere unter anderem wegen deren Alterungsbeständigkeit. Vorzugsweise enthalten diese Acrylat- und/oder Polymethacrylat-basierten Polymeren, wenn sie weitere Monomere umfassen, Vinyl-basierte Monomere, z.B. Vinylacetat, Vinylether, Vinylhalogenide oder Vinylaromatische Verbindungen, z.B. Styrol oder Vinylbenzol, oder aliphatische Monomere, z.B. Ethen, Butadien oder Propen. Besonders geeignet sind Polyacrylate und/oder Polymethacrylate mit Estergruppen mit etwa 1 bis etwa 15 C-Atomen. Am meisten bevorzugt werden Polyacrylate auf Basis von 2-Ethylhexylacrylat und/oder Butylacrylat verwendet. Erfindungsgemäß geeignete Polyvinylverbindungen werden durch dem Fachmann bekannte Dispersionspolymerisation hergestellt. So enthalten kommerziell erhältliche Polyacrylat-Dispersionen üblicherweise etwa 30 bis etwa 60 Gew.-% Wasser und etwa 40 bis etwa 70 Gew.-% Polyacrylate sowie ggf. Additive.

Die Dichtmasse enthält im Nasszustand zweckmäßigerweise in einem wässrigen Medium dispergierte Vinylpolymere. Erfindungsgemäß bevorzugte Dichtmassen enthalten im Nasszustand etwa 15 bis etwa 90 Gew.-%, vorzugsweise etwa 25 bis etwa 80 Gew.-%, insbesondere etwa 30 bis etwa 50 Gew.-% Vinylpolymere und etwa 5 bis etwa 50 Gew.-%, vorzugsweise etwa 5 bis etwa 40 Gew.-%, insbesondere etwa 15 bis etwa 30 Gew.-%, wässriges Medium, jeweils bezogen auf 100 Gew.-% Dichtmasse im Nasszustand, wobei der Rest jeweils Additive sind. Das wässrige Medium enthält Wasser und ggf. wasserlösliche Additive. Diese Additive werden u.a. zugesetzt, um die Frostbeständigkeit der Dichtmasse zu verbessern. Je nach zugegebener Menge, die vom Fachmann leicht bestimmt werden kann, kann die Gefriertemperatur auf bis zu -20°C herabgesetzt werden. Vorzugsweise handelt es sich hierbei um wasserlösliche, anorganische Salze, insbesondere Natriumchlorid, Kaliumchlorid, Calciumchlorid oder Natriumsulfat, oder um wasserlösliche Lösungsmittel, insbesondere Methanol, Ethanol, Propanol oder Aceton, oder um wasserlösliche hochsiedende und/oder weichmachende Verbindungen, insbesondere Ethylenglycol oder Propylenglycol. Die genannten wasserlöslichen Additive können allein oder als Gemische davon verwendet werden.

Die Dichtmasse kann Additive ausgewählt aus anorganischen Füllstoffen; organischen Füllstoffen, insbesondere Weichmachern, Tackifiern, oligomeren Füllstoffen, polymeren Füllstoffen und Rheologie-Modifikatoren, wie z.B. Verdickem oder Thixotropiermitteln; Vernetzern; Haftvermittlern; Stabilisatoren; Entschäumern; Tensiden; Trocknungsadditiven; flüchtigen organischen Verbindungen (VOC); und den oben genannten wasserlöslichen Additiven enthalten. Die Additive können allein oder als Gemische davon verwendet werden. Sie liegen in den folgenden Mengen vor, jeweils bezogen auf 100 Gewichtsteile Dichtmasse im Nasszustand: etwa 0 bis etwa 80 % Gewichtsteile anorganische und/oder organische Füllstoffe; etwa 0 bis etwa 60 Gewichtsteile Weichmacher; etwa 0 bis etwa 80 Gewichtsteile Tackifier; etwa 0 bis etwa 80 Gewichtsteile oligomere und/oder polymere Füllstoffe; etwa 0 bis etwa 20 Gewichtsteile Rheologie-Modifikatoren; etwa 0 bis etwa 15 Gewichtsteile Vemetzer; etwa 0 bis etwa 10 Gewichtsteile Haftvermittler; etwa 0 bis etwa 15 Gewichtsteile Stabilisatoren; etwa 0 bis etwa 10 Gewichtsteile Entschäumer; etwa 0 bis etwa 10 Gewichtsteile Tenside; etwa 0 bis etwa 20 Gewichtsteile Trocknungsadditive; und etwa 0 bis etwa 10 Gewichtsteile flüchtige organische Verbindungen (VOC), vorzugsweise etwa 0 bis etwa 5 Gewichtsteile flüchtige organische Verbindungen (VOC), insbesondere etwa 0 bis etwa 3 Gewichtsteile flüchtige organische Verbindungen (VOC). Bei den jeweiligen Additiven handelt es sich um dem Fachmann auf diesem Gebiet bekannte Additive, die jeweils keinen besonderen Beschränkungen unterliegen. Bevorzugte anorganische Füllstoffe sind gefälltes oder natürliches Bariumsulfat, Titandioxid, gefälltes oder natürliches Calciumcarbonat (z.B. Kreide), gefälltes oder natürliches Kaolin, Talkum, Magnesium- oder Aluminiumhydroxid (letztere Hydroxide erlauben eine Einstellung der Brandklasse), Zinkoxid, Zirkoniumsalze, Glaskugeln oder Mikrohohlkugeln aller Art. Bevorzugte organische Füllstoffe sind z.B. Harze auf Kohlenwasserstoff- oder Kolophoniumbasis, Tallharz, Balsamharz, Terpene, Oligomere, wie z.B. Butylene, Acrylate oder andere Vinyl-basierte Moleküle mit einem relativ niedrigen Molekulargewicht, Urethane oder Ester mit relativ niedrigem Molekulargewicht oder polymere Weichmacher auf Polyesterbasis, z.B. Benzoflex. Als organische Füllstoffe sind auch polymere Füllstoffe geeignet, wie z.B Schlagzähmodifikatoren, Kunststofffasern oder Kunststoffpulver aus z.B. Polyacrylaten, Polystyrol, Polyester, Polyamid, Polyurethan, Polyvinylchlorid, Polyolefinen, Polyvinylacetat, Polyisopren oder Poly(iso)butylen, sowie Blockcopolymere davon. Bei den Weichmachern handelt es sich gemäß DIN 55945 um flüssige oder feste indifferente organische Substanzen mit geringem Dampfdruck. Aufgrund ihres Löse- und Quellvermögens verringern sie die Härte des Vinylpolymeren und ändern sein Haftvermögen. Geeignete Weichmacher sind z.B. Phthalate, Adipate, Citrate, Phosphate, Trimellithsäure oder Sulfonsäure. Bei den Tackifiern handelt es sich vorzugsweise um Kolophonium- oder Kohlenwasserstoff-basierte Harze. Bevorzugte Vernetzer sind Metallsalze, wie Zinkacetat, Magnesiumacetat oder Zirkoniumsalze; Aziridine, Glyoxalate oder Triethylenglykoldivinylether. Bevorzugte Rheologie-Modifikatoren sind Polyurethan-Verdicker, Acrylat-Verdicker, Cellulose-Verdicker, Polyvinylalkohol-Verdicker, Silikate, Vinylether-/Maleinsäureanhydrid oder Polyethylenoxid. Als Haftvermittler sind bevorzugt pH-Regler (z.B. Acrylsäure); Silane, Aziridine oder Fluor-basierte Mittel. Bevorzugte Stabilisatoren sind zur Erhöhung der Temperaturstabilität sterisch gehinderte Phenole, wie z.B. Irganox 110, Antioxidant 330 oder Cyanox 2246, und zur Erhöhung der UV-Beständigkeit sterisch gehinderte Phenole und/oder sterisch gehinderte Amine, wie Irganox 1076 oder 1010, Tinuvin P, Tinovin 326 oder 770, oder Antioxidant 330, oder modifizierte Titandioxide. Bevorzugte Entschäumer sind Entschäumer auf Silicon-, Polyethylenoxid- oder Paraffinölbasis. Bevorzugte Tenside sind Netzmittel, wie anionische oder kationische Netzmittel oder Netzmittel auf F- oder Si-Basis, wobei besonders bevorzugte Netzmittel auf S. 152 und 516 in Handbook of Coatings Additives, Leonard J. Calbo, 1987, Marcel Dekker Inc., 0-8247-7561-9, beschrieben sind. Als Trocknungsadditive eignen sich Zirkoniumderivate. Bei den flüchtigen organischen Verbindungen (VOC) handelt es sich im Sinne der Erfindung um Verbindungen mit einem Dampfdruck von mindestens 0,1 mbar bei 20°C und einem Siedepunkt von höchstens 240°C bei 1013,25 mbar. Diese werden unterteilt in Lösungsmittel mit einem Siedepunkt unterhalb 150°C sowie Hochsieder mit einem Siedepunkt zwischen 150 und 240°C, so wie es auch in der Verordnung über die Lenkungsabgabe auf flüchtige organische Verbindungen (VOCV 814.018), einem Teil des schweizerischen Umweltschutzgesetztes (USG aus 1997) im ersten Abschnitt unter Art. 1 (Begriff) definiert ist. Bevorzugt werden etwa 0 bis etwa 3 Gewichtsteile flüchtige organische Verbindungen, stärker bevorzugt etwa 0,1 bis etwa 0,5 Gewichtsteile flüchtige organische Verbindungen, jeweils bezogen auf 100 Gewichtsteile Dichtmasse im Nasszustand, eingesetzt. Es besteht jedoch auch die Möglichkeit, höhere Mengen an VOC einzusetzen, so wie sie weiter oben definiert sind. Als VOC besonders geeignete Lösungsmittel sind Ethanol, Propanol oder Ethylacetat. Als VOC besonders geeignete Hochsieder sind Glykole, beispielsweise Ethylenglycol oder Propylenglycol. Daneben kann die erfindungsgemäße Dichtmasse noch weitere übliche Zusatzstoffe enthalten, z.B. Biozide (Konservierungsstoffe), wie sie in Handbook of Coatings Additives, Leonard J. Calbo, 1987, Marcel Dekker Inc., 0-8247-7561-9, auf Seite 195-197 definiert sind, oder Farbstoffe.

Stabilisatoren werden insbesondere dann eingesetzt, falls Acrylat-basierte Vinylpolymere mit aliphatischen Monomeren, wie z.B. Vinylacetat oder Butadien, oder aromatischen Monomeren, z.B. Styrol oder Vinylbenzol, verwendet werden. Darüber hinaus ist es bei Verwendung von nicht-hydrierten Tackifiern bevorzugt, eine zusätzliche Menge an Stabilisatoren zuzusetzen, um die gewünschte Alterungsbeständigkeit zu erreichen. Den Tackifiern, oligomeren Füllstoffen und weiteren organischen Füllstoffen kommt die Aufgabe zu, die Selbstklebrigkeit, Kohäsion und Wasserbeständigkeit der Dichtmasse zu verbessern. Durch Wahl der geeigneten Füllstoffe und Vernetzer kann vom Fachmann eine optimale Kohäsion erreicht werden. Diese sollte im Baubereich bei 70°C noch ausreichend sein. Der Fachmann kann hierbei die optimale Kohäsion durch entsprechende Abstimmung der Kettenlänge des Vinylpolymers, die Menge und Qualität der Füllstoffe und Vernetzer abstimmen. Da die Kohäsionsoptimierung immer im Widerstreit mit der Adhäsion steht, muss die Kohäsion so gewählt werden, dass sie nicht höher eingestellt wird, als die Adhäsion es zulässt.

Die Additive liegen in einer Menge von etwa 0 bis etwa 80 Gewichtsteilen, insbesondere von etwa 10 bis etwa 70 Gewichtsteilen, am meisten bevorzugt von etwa 30 bis etwa 60 Gewichtsteilen vor, jeweils bezogen auf 100 Gewichtsteile Dichtmasse im Nasszustand. Die oben genannten wasserlöslichen zur Verbesserung der Frostbeständigkeit zugesetzten Additive liegen vorzugsweise in einer Menge von etwa 0 bis etwa 30 Gewichtsteilen, insbesondere von etwa 0 bis etwa 15 Gewichtsteilen vor, während die anderen Additive vorzugsweise in einer Menge von etwa 0 bis etwa 70, insbesondere von etwa 20 bis etwa 50 Gewichtsteilen, vorliegen, jeweils bezogen auf 100 Gewichtsteile Dichtmasse im Nasszustand.

Die Viskosität der Dichtmasse im Nasszustand beträgt vorzugsweise nach ISO 2555 wenigstens etwa 50 Pa·s bei 23°C bei Bestimmung nach Brookfield Typ A mit einer Spindel 6 bei 10 U/min. Bevorzugt beträgt die Viskosität bei 23°C wenigstens etwa 200 Pa·s, stärker bevorzugt wenigstens etwa 350 Pa·s, jeweils bei Bestimmung nach Brookfield Typ A mit einer Spindel 7 bei 10 U/min. Die Obergrenze der Viskosität wird dadurch bestimmt, dass die Dichtmasse noch handhabbar ist. Die geeignete Viskosität kann vom Fachmann im Rahmen fachüblicher Versuche durch Verwendung der oben genannten Rheologie-Modifikatoren und/oder der anderen oben genannten Additiven eingestellt werden. Rheologie-Modifikatoren können auch zugesetzt werden, um die Handhabung der Dichtmasse zu erleichtern. Mit Hilfe von Rheologie-Modifikatoren, wie z.B. Verdickern oder Thixotropiermitteln, wird eine standfeste, fließfähige Dichtmasse erhalten, die sich aus einer Kartusche oder einem Kunststoffbeutel leicht herauspressen und verarbeiten lässt. Gleichzeitig erhöhen diese Modifikatoren die Sofortfestigkeit, wodurch die Dichtmasse das Gewicht z.B. eines Polyolefin-Materials tragen kann. Die Benetzung des abzudichtenden Materials wird mit Hilfe von Tensiden erreicht. Da diese eine Schäumung verursachen können, können Entschäumer zugemischt werden. Eine Repulsion der Dichtmasse auf dem abzudichtenden Material kann wiederum durch eine Erhöhung der Viskosität mit Verdickern verhindert werden.

Erfindungsgemäß umfasst die Dichtmasse im Trockenzustand wenigstens eine Phase, die vorliegend auch Bindematrix genannt wird. Diese Phase enthält die Vinylpolymeren und ggf. darin lösliche Additive. Die Glasübergangstemperatur T_{g} der Bindematrix liegt unter etwa +10°C, vorzugsweise zwischen etwa -80 und etwa +10°C, insbesondere zwischen etwa -80 und etwa -40°C, wobei die Glasübergangstemperatur T_{g} mittels DSC *(Differential Scanning Calorimetry)* wie folgt bestimmt wird. Eine Probe von etwa 30 mg wird zuerst bei -10°C/min auf -120°C abgekühlt und anschließend bei 10°C/min auf 40°C erwärmt. Bei der Aufwärmung ergibt sich ein Sprung in der Cp-Kurve (Cp bedeutet Wärmekapazität), dessen Mittelpunkt die Glasübergangstemperatur T_{g} definiert. Dieser Mittelpunkt kann auch durch Differenzieren der Kurve ermittelt werden. Die Verwendung von Weichmachern, oligomeren Füllstoffen und/oder Tackifiern erlaubt auch die Verwendung von Vinylpolymeren, insbesondere Polyacrylaten, mit einer höheren Glasübergangstemperatur als 10°C, da über die genannten Additive die Glasübergangstemperatur der Bindematrix auf den gewünschten Wert gesenkt werden kann. Allgemein bestimmt sich die Anzahl der Phasen nach der Zusammensetzung der Dichtmasse. Neben der Bindematrix umfasst diese vorzugsweise wenigstens eine weitere Phase, insbesondere zwei weitere Phasen. Diese weitere(n) Phase(n) enthält (enthalten) Wasser und in der Bindematrix nicht gelöste Additive.

Erfindungsgemäß bezeichnet der Begriff Trockenzustand den Zustand, den die Dichtmasse 1 Stunde nach ihrem Auftrag auf Si-Papier bei einem Auftragsgewicht von etwa 300 g/m² (trocken) bei 70°C erreicht. Der Begriff Nasszustand bezeichnet vorliegend den Zustand, in dem die Dichtmasse nach ihrer Herstellung erhalten wird und der bei ihrer Aufbewahrung, z.B. in einem Kunststoffbeutel oder einer Kartusche, erhalten bleibt.

Die erfindungsgemäße Dichtmasse hat im Trockenzustand eine Schälhaftung von wenigstens etwa 5 N/25 mm, vorzugsweise von etwa 5 bis etwa 50 N/25 mm, jeweils bei Bestimmung gemäß DIN EN (Europäische Norm) 1939 zwischen 5 und 50°C auf beispielsweise Polyolefin-Materialien. Die Dichtmasse besitzt diese Schälhaftung nicht nur auf Polyolefin-Materialien, sondern auch auf allen anderen Materialien, z.B. Papieren, Vliesen, Polyamiden oder Polyestern, außer auf Materialien mit einer sehr tiefen Oberflächenspannung wie silikonisierte und fluorisierte Oberflächen. Die Schälhaftung stellt eine wiederholte Schälhaftung dar. Diese Schälhaftung kann durch eine gezielte Einstellung der Polarität der Vinylpolymeren erreicht werden, die vom Fachmann im Rahmen fachüblicher Versuche leicht durchgeführt werden kann. Bei einer zu hohen Polarität des Vinylpolymers ist die Affinität für ein Polyolefin-Material zu niedrig, während bei zu geringer Polarität des Vinylpolymers zu wenig Doppelbindungen vorhanden sind, um genügend Van-der-Waals-Wechselwirkungen mit einem Polyolefin-Material zu erzielen. Hierbei muss die Dichtmasse so formuliert werden, dass eine höhere Adhäsion (Haftung) auf polyolefinischen Materialien als eine Kohäsion (innere Festigkeit) der Dichtmasse erreicht wird. Die Polarität des Vinylpolymers, insbesondere des Polyacrylats, kann durch die Wahl der Monomere eingestellt werden. Acrylatmonomere mit kurzen Estergruppen, z.B Methyl- oder Ethylgruppen, haben eine hohe Polarität, während Acrylatmonomere mit langen Estergruppen, z.B. Stearylacrylate, eine niedrigere Polarität haben. Die Polarität eines Polyacrylats kann weiterhin optimiert werden durch Einsatz von Vinyl-basierten Verbindungen, z.B. Vinylacetat, Vinylether, Vinylhalogeniden oder Vinyl-aromatischen Verbindungen, z.B. Styrol. Durch Zugabe von Divinyl- oder Tervinylcomonomeren kann die Kohäsion, molare Masse und das Schubmodul des Polymers geregelt werden.

Der dynamische Schubmodul G' der Dichtmasse im Trockenzustand bei Bestimmung gemäß untenstehender Meßmethode liegt vorzugsweise im Bereich von etwa 5·10⁵ Pa bis etwa 5·10³ Pa bei 25°C, insbesondere niedriger als etwa 5·10⁵ Pa bei Temperaturen tiefer als -10°C, bevorzugt tiefer als -25°C, und höher als etwa 5·10³ Pa bei Temperaturen höher als 60°C, bevorzugt höher als 80°C, jeweils bei Bestimmung gemäß folgender Methode. Im Sinne der vorliegenden Erfindung handelt es sich bei dem Schubmodul G' um ein Elastizitätsmodul (oder Speichermodul), das an einem Rheometer-Platte-Platte-System mit einer Frequenz von 1 Hz, einer Ausdehnung von 0,2 % und einer Aufwärmung von 5°C/min auf einem Muster einer Dicke von 800 µm gemessen wird.

Die Herstellung der Dichtmasse unterliegt keinen Beschränkungen. Die genannten Komponenten werden miteinander vorzugsweise bei einer Temperatur von etwa 5 bis etwa 100°C vermischt, wobei sich zum Vermischen alle gängigen Mischsysteme eignen, z.B. statische oder dynamische Mischer. Vorteilhafterweise werden Mischer mit programmierbarer Drehzahlregelung verwendet, so dass der Produktionsablauf festgelegt werden kann. Vorzugsweise werden Mischer mit hohen Umdrehungszahlen eingesetzt, wobei die genaue Umdrehungszahl von der Zusammensetzung der Dichtungsmasse abhängig ist. Wenn hochviskose Additive eingesetzt werden, ist es zweckmäßig, diese vor dem Vermischen zu erwärmen, um dadurch das Vermischen zu erleichtern. Die Vermischung erfolgt unter Vakuum, vorzugsweise bei einem Druck von etwa 200 bis etwa 80 mbar. Die erhaltene Paste wird dann in Kartuschen oder Kunststoffbeutel abgefüllt. Sie ist darin wenigstens ein Jahr haltbar.

Zur Anwendung wird die Dichtmasse mittels einer Presspistole aus der Kartusche oder dem Kunststoffbeutel gepresst. Die Dichtmasse trocknet dann durch Verdunstung des Wassers aus. Im Trockenzustand enthält die Dichtmasse etwa 0 bis etwa 20 Gew.-% Wasser, insbesondere etwa 0 bis etwa 10 Gew.-% Wasser, jeweils bezogen auf 100 Gew.-% der getrockneten Dichtmasse.

Die Dichtmasse kann in einem Temperaturbereich von etwa 1 bis etwa 60°C verarbeitet werden. Die bevorzugte Verarbeitungstemperatur beträgt etwa 5 bis etwa 50°C. Wenn tiefere Temperaturen gewünscht sind, können geeignete wasserlösliche Additive, wie sie oben beschrieben wurden, zur Verbesserung der Frostbeständigkeit zugesetzt werden. Im Trockenzustand erfüllt die Dichtmasse ihre Funktion in einem Temperaturbereich von etwa -20 bis etwa +80°C.

Die Dichtmasse wird zum Abdichten und/oder Anschließen von Materialien, insbesondere zum Anschließen von Materialien, verwendet. Da die Dichtmasse auf allen Materialien, z.B. Polyolefinen, Papieren, Vliesen, Polyamiden und Polyestern, außer silikonisierten und fluorisierten Oberflächen haftet, findet sie überall dort Verwendung, wo solche Materialien, insbesondere Polyolefin-Materialien, abzudichten sind, und insbesondere dort, wo keine freiliegenden Oberflächen vorliegen. Die Dichtmasse kann jedoch auch überall dort angewendet werden, wo es nicht stört, dass Schmutz hängen bleibt. Insbesondere finden die Dichtmassen Verwendung im Baubereich, bei Sockelleisten, bei, insbesondere Polyolefinhaltigen, Profilen oder im industriellen Sektor. Eine spezielle Anwendung im Baubereich ist im Dachbereich das Anschließen eines Polyolefin-Materials an einem festen Untergrund, z.B. einer gefärbten oder ungefärbten Wand aus Holz, Putz, Beton, Kalkstein oder Ziegelstein. Geeignete Polyolefin-Materialien sind z.B. Folien, Bahnen, Spritzgussteile, Fasern und Kabel.

Somit weisen bevorzugte erfindungsgemäße Dichtmassen die folgenden Merkmale und Vorteile auf:
- im wesentlichen VOC-frei, d.h. im wesentlichen lösungsmittelfrei und hochsiederfrei, damit auch geruchsarm;
- im Trockenzustand Schälhaftung auf polyolefinischen Materialien von wenigstens 5 N/25 mm (nach DIN EN 1939) bei sowohl 5°C als auch bei 23°C;
- im Trockenzustand bei -20 bis +80°C selbstklebend;
- alterungsbeständig, d.h. auch bei Alterung nimmt die Schälhaftung nicht unter 5 N/25 mm (DIN EN 1939) ab;
- Glasübergangstemperatur der Bindematrix unter 10°C; und
- mit einer Kartusche und Presspistole verarbeitbar.

Somit wird erfindungsgemäß eine Dichtmasse bereitgestellt, die im wesentlichen VOC-frei ist und eine gute Haftung auf insbesondere Polyolefin-Materialien zeigt.

Die Erfindung wird anhand des folgenden Beispiels, das eine bevorzugte Ausführungsform der Erfindung darstellt, näher erläutert.

### Beispiel

60 Gewichtsteile einer Polyacrylatdispersion mit einer Glasübergangstemperatur T_{g} = -40°C, mit einer Schälhaftung für PO-Materialien von wenigstens 15 N/25 mm und mit einem Feststoffgehalt von 65 Gew.-%, wovon etwa 99,5 Gew.-% Polyacrylat und der Rest Emulgatoren sind, und mit 35 Gew.-% Wasser wird mit 6 Gewichtsteilen wasserlöslichem Additiv, nämlich 6 Gewichtsteilen Natriumsulfat, und den folgenden weiteren Additiven bei Raumtemperatur (23°C) und 100 mbar vermischt: 9 Gewichtsteile Harz, 7 Gewichtsteile Polyamidfasern, 13 Gewichtsteile Polyisobutylen, 1 Gewichtsteil Polyurethan-Verdicker, 2 Gewichtsteile Polyvinylalkohol-Verdicker, 0,3 Gewichtsteile UV-Stabilisator, 0,2 Gewichtsteile Biozid und 0,5 Gewichtsteile Tensid. Die Paste hat im Nasszustand eine Viskosität von etwa 370 Pa·s (nach Brookfield, Typ A, Spindel 7, 10 U/min) bei 23°C. Im Trockenzustand hat die erhaltene Masse einen Schubmodul G' von 5·10⁵ Pa bei -25°C bis 5·10³ Pa bei 100°C und eine Schälhaftung auf Polyolefin-Materialien von 20 N/25 mm bei 23°C. Die getrocknete Dichtmasse ist selbstklebend, wobei bei Messung der Klebrigkeit der Oberfläche der Weg der laufenden Kugel etwa 7 cm betrug. Die Glasübergangstemperatur der Bindematrix beträgt -30°C. Hierbei wurden alle Messungen gemäß den oben beschriebenen Bestimmungsmethoden durchgeführt.

Die folgenden Beschreibungsseiten 14 bis 16 beziehen sich auf bevorzugte Ausführungsformen der Erfindung.
1. Einkomponentige Dichtmasse auf Basis einer Dispersion von Vinylpolymeren, wobei die Dichtmasse im Nasszustand im wesentlichen frei von flüchtigen organischen Verbindungen (VOC) ist und im Trockenzustand selbstklebend ist.
2. Dichtmasse nach Anspruch 1, dadurch gekennzeichnet, dass sie im Trockenzustand eine Schälhaftung von wenigstens etwa 5 N/25mm zwischen etwa 5 und etwa 50°C auf beispielsweise Polyolefin-Materialien hat.
3. Dichtmasse nach Anspruch 1 oder 2, dadurch gekennzeichnet, dass sie im Trockenzustand einen Schubmodul G' im Bereich von etwa 5·10⁵ Pa bis etwa 5·10³ Pa bei 25°C, von weniger als etwa 5·10⁵ Pa bei Temperaturen tiefer als -10°C und von mehr als etwa 5·10³ Pa bei Temperaturen höher als 60°C hat.
4. Dichtmasse nach einem der Ansprüche 1 bis 3, dadurch gekennzeichnet, dass sie im Trockenzustand aus wenigstens einer Phase besteht, deren Glasübergangstemperatur T_{g} unter etwa 10°C liegt.
5. Dichtmasse nach einem der vorhergehenden Ansprüche, dadurch gekennzeichnet, dass sie im Nasszustand, jeweils bezogen auf 100 Gewichtsteile Dichtmasse, mit etwa 0 bis etwa 80 Gewichtsteilen Additiven modifiziert ist, wobei die Additive weniger als etwa 3 Gewichtsteile flüchtige organische Verbindungen (VOC) umfassen.
6. Dichtmasse nach einem der vorhergehenden Ansprüche, dadurch gekennzeichnet, dass sie im Nasszustand eine Viskosität von wenigstens 50 Pa·s bei 23°C hat.
7. Dichtmasse nach einem der vorhergehenden Ansprüche, dadurch gekennzeichnet, dass die Vinylpolymeren ein Polymer auf Basis von wenigstens Acrylat- und/oder Methacrylat-Monomeren enthalten.
8. Dichtmasse nach einem der vorhergehenden Ansprüche, gekennzeichnet im Nasszustand durch einen Gehalt an Vinylpolymeren von etwa 15 bis etwa 90 Gew.-%, bezogen auf 100 Gew.-% Dichtmasse.
9. Dichtmasse nach einem der vorhergehenden Ansprüche, gekennzeichnet im Nasszustand durch einen Gehalt an Vinylpolymeren von etwa 25 bis etwa 80 Gew.-%, bezogen auf 100 Gew.-% Dichtmasse.
10. Dichtmasse nach einem der Ansprüche 5 bis 9, dadurch gekennzeichnet, dass die Additive wenigstens eine Verbindung ausgewählt aus wasserlöslichen Verbindungen, anorganischen Füllstoffen, organischen Füllstoffen, Vernetzern, Haftvermittlern, Stabilisatoren, Entschäumern, Tensiden, Trocknungsadditiven und flüchtigen organischen Verbindungen (VOC) umfassen.
11. Dichtmasse nach Anspruch 10, dadurch gekennzeichnet, dass die wasserlöslichen Verbindungen wenigstens eine Verbindung ausgewählt aus Natriumchlorid, Kaliumchlorid, Calciumchlorid, Natriumsulfat, Methanol, Ethanol, Propanol, Aceton, Ethylglykol und Propylenglykol umfassen.
12. Dichtmasse nach einem der vorhergehenden Ansprüche, dadurch gekennzeichnet, dass sie in einer Kartusche oder einem Kunststoffbeutel enthalten ist.
13. Verwendung einer Dichtmasse nach einem der Ansprüche 1 bis 12 zum Abdichten und/oder Anschließen von Materialien.
14. Verwendung nach Anspruch 13, wobei wenigstens ein Material ein Polyolefin-Material ist.
15. Mit einer Dichtmasse nach einem der Ansprüche 1 bis 12 beschichtete Materialien.
16. Verfahren zur Herstellung einer Dichtmasse nach einem der vorhergehenden Ansprüche, dadurch gekennzeichnet, dass die Komponenten der Dichtmasse unter Vakuum miteinander vermischt werden.

## Patentansprüche

1. Einkomponentige Dichtmasse auf Basis einer Dispersion von Vinylpolymeren in einem wässrigen Medium, wobei die Dichtmasse im Nasszustand 0 bis 10 Gewichtsteile flüchtige organische Verbindungen (VOC) und 10 bis 70 Gewichtsteile Additive, jeweils bezogen auf 100 Gewichtsteile Dichtmasse, aufweist, und im Trockenzustand eine selbstklebende Eigenschaft aufweist, bei der der Weg einer laufenden Kugel bei Messung gemäß "Test Methods for Pressure-Sensitive Adhesives, 6^{th} Edition, Pressure sensitive tape counsel, Itasca III" weniger als 30 cm beträgt.

2. Dichtmasse nach Anspruch 1, **dadurch gekennzeichnet, dass** sie im Trockenzustand eine Schälhaftung von wenigstens 5 N/25 mm bei sowohl 5°C als auch 23°C und bevorzugt zwischen 5 und 50° C auf Polyolefin-Materialien, gemessen nach DIN EN 1939, hat.

3. Dichtmasse nach Anspruch 1 oder 2, **dadurch gekennzeichnet, dass** sie im Trockenzustand ein Schubmodul G' im Bereich von 5 · 10⁵ Pa bis 5 · 10³ Pa bei 25° C, von weniger als 5 · 10⁵ Pa bei Temperaturen tiefer als -10° C und von mehr als 5 · 10³ Pa bei Temperaturen höher als 60° C hat.

4. Dichtmasse nach einem der Ansprüche 1 bis 3, **dadurch gekennzeichnet, dass** sie im Trockenzustand aus wenigstens einer Phase besteht, deren Glasübergangstemperatur T_{g} unter 10° C liegt.

5. Dichtmasse nach einem der vorhergehenden Ansprüche, **dadurch gekennzeichnet, dass** sie im Nasszustand 30 bis 60 Gewichtsteile Additive, bezogen auf 100 Gewichtsteile Dichtmasse, aufweist.

6. Dichtmasse nach einem der vorhergehenden Ansprüche, **dadurch gekennzeichnet, dass** sie im Nasszustand 15 bis 30 Gew.-% wässriges Medium, bezogen auf 100 Gew.-% Dichtmasse, enthält.

7. Dichtmasse nach einem der vorhergehenden Ansprüche, **dadurch gekennzeichnet, dass** sie im Nasszustand eine Viskosität von wenigstens 50 Pa · s bei 23° C, vorzugsweise von wenigstens 200 Pa · s bei 23° C, hat.

8. Dichtmasse nach einem der vorhergehenden Ansprüche, **dadurch gekennzeichnet, dass** die Vinylpolymeren Acrylat- und/oder Methacrylat-Monomere enthalten.

9. Dichtmasse nach einem der vorhergehenden Ansprüche, gekennzeichnet im Nasszustand durch einen Gehalt an Polyacrylaten von 15 bis 90 Gew.%, bevorzugt von 25 bis 80 Gew.%, jeweils bezogen auf 100 Gew.% Dichtmasse.

10. Dichtmasse nach einem der vorhergehenden Ansprüche, **dadurch gekennzeichnet, dass** die Additive wenigstens eine Verbindung ausgewählt aus wasserlöslichen Verbindungen, anorganischen Füllstoffen, organischen Füllstoffen, Vernetzern, Haftvermittlern, Stabilisatoren, Entschäumern, Tensiden, Trocknungsadditiven umfassen.

11. Dichtmasse nach Anspruch 10, **dadurch gekennzeichnet, dass** die wasserlöslichen Verbindungen wenigstens eine Verbindung ausgewählt aus Natriumchlorid, Kaliumchlorid, Calciumchlorid, Natriumsulfat, Methanol, Ethanol, Propanol, Aceton, Ethylglykol und Propylenglykol umfassen.

12. Dichtmasse nach einem der vorhergehenden Ansprüche, **dadurch gekennzeichnet, dass** sie eine selbstklebende Eigenschaft aufweist, bei der der Weg der laufenden Kugel weniger als 20 cm beträgt.

13. Dichtmasse nach einem der vorhergehenden Ansprüche, **dadurch gekennzeichnet, dass** sie in einer Kartusche oder einem Kunststoffbeutel enthalten ist.

14. Dichtmasse nach Anspruch 13, **dadurch gekennzeichnet, dass** sie mit einer Presspistole verarbeitbar ist.

15. Verwendung einer Dichtmasse nach einem der Ansprüche 1 bis 14 im Baubereich.

16. Verwendung nach Anspruch 15 im Dachbereich zum Anschließen eines Polyolefin-Materials an einen festen Untergrund.

17. Verwendung einer Dichtmasse nach einem der Ansprüche 1 bis 14 zum Abdichten und/oder Anschließen von Materialien.

18. Verwendung nach Anspruch 17, wobei wenigstens ein Material ein Polyolefin-Material ist.

19. Verwendung nach Anspruch 18, wobei das Polyolefin-Material eine Folie ist.

20. Verfahren zur Herstellung einer Dichtmasse nach einem der Ansprüche 1 bis 14, **dadurch gekennzeichnet, dass** die Komponenten der Dichtmasse unter Vakuum miteinander vermischt werden.

21. System, bestehend aus einem Material, das im Baubereich im Dachbereich anzuschließen und/oder abzudichten ist, und aus einer einkomponentigen Dichtmasse gemäß einem der Ansprüche 1 bis 14.

22. System nach Anspruch 21, **dadurch gekennzeichnet, dass** das Material ein Polyolefin-Material ist.

23. System nach Anspruch 21, **dadurch gekennzeichnet, dass** das Material ein Polyamid-Material ist.

24. System nach Anspruch 21, **dadurch gekennzeichnet, dass** das Material ein Polyester-Material ist.

25. System nach Anspruch 21, **dadurch gekennzeichnet, dass** das Material ein Vlies-Material ist.

26. System nach Anspruch 21, **dadurch gekennzeichnet, dass** das Material ein Papier-Material ist.

27. System nach einem der Ansprüche 21 bis 26, **dadurch gekennzeichnet, dass** das Material eine Folie ist.

28. System nach Anspruch 27, **dadurch gekennzeichnet, dass** das Material eine Polyolefin-Folie ist.
